(19) Europäisches Patentamt / European Patent Office / Office européen des brevets

(11) **EP 4 085 392 B1**

(12) **EUROPEAN PATENT SPECIFICATION**

(45) Date of publication and mention of the grant of the patent:
**26.11.2025 Bulletin 2025/48**

(21) Application number: **21704259.7**

(22) Date of filing: **08.02.2021**

(51) International Patent Classification (IPC):
**G06N 3/092** (2023.01)    **G06N 3/045** (2023.01)
**G06N 3/096** (2023.01)

(52) Cooperative Patent Classification (CPC):
**G06N 3/092; G06N 3/045; G06N 3/096**

(86) International application number:
**PCT/EP2021/052986**

(87) International publication number:
**WO 2021/156516 (12.08.2021 Gazette 2021/32)**

(54) **MULTI-OBJECTIVE REINFORCEMENT LEARNING USING OBJECTIVE-SPECIFIC ACTION-VALUE FUNCTIONS**

MULTIZIEL-VERSTÄRKUNGSLERNEN UNTER VERWENDUNG ZIELSPEZIFISCHER AKTIONSWERTFUNKTIONEN

APPRENTISSAGE PAR RENFORCEMENT MULTI-OBJECTIF UTILISANT DES FONCTIONS DE VALEUR D'ACTION SPÉCIFIQUES À L'OBJECTIF

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: **07.02.2020 US 202062971661 P**

(43) Date of publication of application:
**09.11.2022 Bulletin 2022/45**

(73) Proprietor: **GDM Holding LLC**
**Mountain View, CA 94043 (US)**

(72) Inventors:
• **ABDOLMALEKI, Abbas**
London N1C 4AG (GB)
• **HUANG, Sandy Han**
London N1C 4AG (GB)

(74) Representative: **Marks & Clerk GST**
**1 New York Street**
**Manchester M1 4HD (GB)**

(56) References cited:
• TOM SCHAUL ET AL: "Universal Value Function Approximators", VOLUME 37: PROCEEDINGS OF THE 32ND INTERNATIONAL CONFERENCE ON MACHINE LEARNING, 11 July 2015 (2015-07-11), XP055344798
• TUOMAS HAARNOJA ET AL: "Composable Deep Reinforcement Learning for Robotic Manipulation", ARXIV.ORG, CORNELL UNIVERSITY LIBRARY, 201 OLIN LIBRARY CORNELL UNIVERSITY ITHACA, NY 14853, 19 March 2018 (2018-03-19), XP080865728
• TUOMAS HAARNOJA ET AL: "Reinforcement Learning with Deep Energy-Based Policies", ARXIV.ORG, CORNELL UNIVERSITY LIBRARY, 201 OLIN LIBRARY CORNELL UNIVERSITY ITHACA, NY 14853, 27 February 2017 (2017-02-27), XP080748703

**Description**

BACKGROUND

This specification relates to reinforcement learning.

In a reinforcement learning system, an agent interacts with an environment by performing actions that are selected by the reinforcement learning system in response to receiving observations that characterize the current state of the environment.

Some reinforcement learning systems select the action to be performed by the agent in response to receiving a given observation in accordance with an output of a neural network.

Neural networks are machine learning models that employ one or more layers of nonlinear units to predict an output for a received input. Some neural networks are deep neural networks that include one or more hidden layers in addition to an output layer. The output of each hidden layer is used as input to the next layer in the network, i.e., the next hidden layer or the output layer. Each layer of the network generates an output from a received input in accordance with current values of a respective set of parameters.

Schaul et al., "Universal Value Function Approximators", VOLUME 37: Proceedings Of The 32nd International Conference On Machine Learning, (20150711), describes so-called universal value function approximators. Haarnoja et al., "Composable Deep Reinforcement Learning for Robotic Manipulation", arxiv.org, Cornell University Library, 201 Olin Library Cornell University Ithaca, NY 14853, (20180319) describes applying maximum entropy policies trained by soft Q-learning to real-world robotic manipulation. Haarnoja et al., "Reinforcement Learning with Deep Energy-Based Policies", arxiv.org, Cornell University Library, 201 Olin Library Cornell University Ithaca, NY 14853, (20170227) describes a method for learning energy-based policies for continuous states and actions.

SUMMARY

This specification generally describes methods for training a reinforcement learning system that selects actions to be performed by a reinforcement learning agent interacting with an environment. The methods can be used to train a reinforcement learning system which has multiple, potentially conflicting objectives.

In one aspect there is provided a method for training a neural network system by reinforcement learning according to the appended claim 1.

By determining separate action-value functions for each objective, the methods described herein are able to effectively balance competing objectives during reinforcement learning. The action-value functions overcome problems associated with determining the optimum weights when combining action values for separate objectives. Furthermore, the separate action-value functions provide scale-invariance with regard to the size of the rewards for each objective, thereby avoiding one or more of the objectives dominating the learning through the relative size of their rewards.

The set of one or more trajectories may be obtained from storage (i.e. may be previously calculated) or may be obtained by applying the agent to one or more states. The set of one or more trajectories may comprise a plurality of trajectories, thereby allowing batch learning. Alternatively, one trajectory may be provided per update as part of online learning.

It should be noted that whilst the term "reward" is discussed herein, these rewards may be negative. In the case of negative rewards, these may equally be considered costs. In this case, the overall objective of a reinforcement learning task would be to minimize the expected cost (instead of maximizing the expected reward or return).

In some implementations each action-value function provides a distribution of action values for a corresponding objective of the plurality of objectives across a range of potential state-action pairs for the previous policy. Each action-value function may output an action-value representing the expected cumulative discounted reward for the corresponding objective when choosing a given action in response to a given state. This cumulative discounted reward may be calculated over a number of subsequent actions, implemented in accordance with the previous policy. The action-value function for each objective may be considered an objective-specific action-value function.

Determining an updated policy comprises determining an objective-specific policy for each objective in the plurality of objectives. Each objective-specific policy is determined based on the corresponding action-value function for the corresponding objective.

By combining objectives through a combination of objective-specific policies, the methodology described herein combines the objectives in distribution space. This is in contrast to combining objectives in reward space (e.g. by transforming a multi-objective reward vector into a single scalar reward). By combining the objectives in distribution space, the combination is therefore invariant to the scale of the rewards. The relative contribution of each objective to the updated policy can be scaled through use of constraints on the determination of the objective-specific policies.

In some implementations fitting the set of policy parameters of the updated policy to the combination of the objective-specific policies comprises determining the set of policy parameters that minimizes a difference between the updated policy and the combination of the objective-specific policies.

The minimization of the difference between the updated policy and the combination of the objective-specific policies may be constrained such that a difference between the updated policy and the previous policy does not exceed a trust region threshold. In other words, the set of policy parameters for the updated policy may be constrained such that a difference between the updated policy and the previous policy cannot exceed the trust region threshold. The trust region threshold may be considered a hyperparameter that limits the overall change in the policy to improve stability of learning.

The differences between policies discussed herein may be calculated through use of the Kullback-Leibler (KL) divergence or any other appropriate measure of the difference between distributions.

Determining an objective-specific policy for each objective comprises determining objective-specific policy parameters for the objective-specific policy that increase the expected return according to the action-value function for the corresponding objective relative to the previous policy.

Determining the objective-specific policy for each objective comprises determining objective-specific policy parameters for the objective-specific policy that that maximize the expected return according to the action-value function for the corresponding objective relative to the previous policy, subject to a constraint that the objective-specific policy may not differ from the previous policy by more than a corresponding difference threshold. The difference between the objective-specific policy and the previous policy may be determined based on the Kullback-Leibler divergence or any other appropriate measure of the difference between distributions.

Accordingly, each objective-specific policy can be determined subject to a constraint that it does not differ from the previous policy by more than a corresponding difference threshold. The corresponding difference threshold may be considered to represent the relative contribution of the corresponding objective to the updated policy. Accordingly, the relative contribution of each objective to the updated policy may be adjusted by adjusting the corresponding difference threshold. That is, the relative weight between each objective is encoded in the form of constraints on the influence of each objective on the policy update.

In some implementations the objective-specific policies are non-parametric policies. This reduces the computational complexity with regard to determining the objective-specific policies whilst conforming to the constraints with regard to the corresponding difference thresholds. This is because the constrained optimization can be solved in closed form for each state.

Each objective-specific policy, $q_k(a|s)$, may be determined from a scaled action-value function for the objective of the objective-specific policy, wherein the scaled action-value function is scaled by a value dependent upon a preference for the objective. The value dependent upon a preference for the objective may be dependent on the difference threshold for the objective. The value dependent upon a preference for the objective may be a temperature parameter $\eta_k$ dependent on the difference threshold.

For instance, each objective-specific policy, $q_k(a|s)$, may be determined by calculating:

$$q_k(a|s) = N \, \pi_{old}(a|s) \exp\left(\frac{Q_k(s,a)}{\eta_k}\right)$$

where:

$N$ is a normalization constant;
$k$ is the objective;
$a$ is an action;
$s$ is a state;
$\pi_{old}(a|s)$ is the previous policy;
$Q_k(s, a)$ is the action-value function for the objective; and
$\eta_k$ is a temperature parameter.

For each objective, $k$, the temperature parameter $\eta_k$ may be determined by solving the following equation:

$$\eta_k = \operatorname*{argmin}_{\eta} \eta \epsilon_k + \eta \int_s \mu(s) \log \int_a \pi_{old}(a|s) \exp\left(\frac{Q_k(s,a)}{\eta}\right) da \, ds$$

where:

$\varepsilon_k$ is the difference threshold for the corresponding objective; and
$\mu(s)$ is a visitation distribution.

Each temperature parameter may be determined via gradient descent.

In a further implementation there is provided a method for training a neural network system by reinforcement learning, the neural network system being configured to receive an input observation characterizing a state of an environment interacted with by an agent and to select and output an action in accordance with a policy that aims to satisfy a plurality of objectives. The method may comprise obtaining a set of one or more trajectories, each trajectory comprising a state of an environment, an action applied by the agent to the environment according to a previous policy in response to the state, and a set of rewards for the action, each reward relating to a corresponding objective of the plurality of objectives. The method may further comprise determining a probability distribution (such as an action distribution or a state-action distribution) for each of the plurality of objectives based on the set of one or more trajectories, each probability distribution providing a distribution of action probabilities that would increase the expected return according to a corresponding objective relative to the policy. The method may further comprise determining an updated policy based on a combination of the probability distributions for the plurality of objectives.

Determining a probability distribution for each of the plurality of objectives may comprise, for each objective: determining a value function defining a value representing an expected return according to the corresponding objective that would result from the agent following the previous policy from a given state; and determining the probability distribution for the objective based on the value function.

Each probability distribution may be a state-action distribution defining a distribution of probabilities of state-action pairs and the value function for each objective may be a state-value function defining a value representing an expected return according to the corresponding objective that would result from the agent following the previous policy from a given state. This may be applicable to on-policy learning.

Alternatively, each probability distribution may be an objective-specific policy (an action distribution) defining a distribution of probabilities of actions over states and the value function may be an action-value function representing an expected return according to the corresponding objective that would result from the agent performing a given action in response to a given state according to the previous policy. This may be applicable to off-policy learning.

The methods described herein may be implemented through one or more computing devices and/or one or more computer storage media.

In one aspect there is provided a system comprising one or more computers and one or more storage devices storing instructions that when executed by the one or more computers cause the one or more computers to perform the following operations: obtaining a set of one or more trajectories, each trajectory comprising a state of an environment, an action applied by the agent to the environment according to a previous policy in response to the state, and a set of rewards for the action, each reward relating to a corresponding objective of the plurality of objectives; determining an action-value function for each of the plurality of objectives based on the set of one or more trajectories, each action-value function determining an action value representing an estimated return according to the corresponding objective that would result from the agent performing a given action in response to a given state according to the previous policy; and determining an updated policy based on a combination of the action-value functions for the plurality of objectives.

In one aspect there is provided one or more computer storage media storing instructions that when executed by one or more computers cause the one or more computers to perform the following operations: obtaining a set of one or more trajectories, each trajectory comprising a state of an environment, an action applied by the agent to the environment according to a previous policy in response to the state, and a set of rewards for the action, each reward relating to a corresponding objective of the plurality of objectives; determining an action-value function for each of the plurality of objectives based on the set of one or more trajectories, each action-value function determining an action value representing an estimated return according to the corresponding objective that would result from the agent performing a given action in response to a given state according to the previous policy; and determining an updated policy based on a combination of the action-value functions for the plurality of objectives.

In order for the agent to interact with the environment, the system receives data characterizing the current state of the environment and selects an action to be performed by the agent in response to the received data. Data characterizing a state of the environment will be referred to in this specification as an observation.

In some applications the environment is a real-world environment and the agent is a mechanical agent interacting with the real-world environment. For example, the agent may be a robot interacting with the environment to accomplish a specific task. As another example, the agent may be an autonomous or semi-autonomous land or air or water vehicle navigating through the environment. In these implementations, the actions may be control inputs to control a physical behavior of the robot or vehicle.

In general the observations may include, for example, one or more of images, object position data, and sensor data to capture observations as the agent interacts with the environment, for example sensor data from an image, distance, or position sensor or from an actuator. In the case of a robot or other mechanical agent or vehicle the observations may similarly include one or more of the position, linear or angular velocity, force, torque or acceleration, and global or relative pose of one or more parts of the agent. The observations may be defined in 1, 2 or 3 dimensions, and may be absolute and/or relative observations. For example in the case of a robot the observations may include data characterizing the current state of the robot, e.g., one or more of: joint position, joint velocity, joint force, torque or acceleration, and global or relative pose of a part of the robot such as an arm and/or of an item held by the robot. The observations may also include, for example, sensed electronic signals such as motor current or a temperature signal; and/or image or video data for example from a camera or a LIDAR sensor, e.g., data from sensors of the agent or data from sensors that are located separately from the agent in the environment.

In these applications the actions may be control inputs to control the robot, e.g., torques for the joints of the robot or higher-level control commands; or to control the autonomous or semi-autonomous land or air or sea vehicle, e.g., torques to the control surface or other control elements of the vehicle or higher-level control commands; or e.g. motor control data. In other words, the actions can include for example, position, velocity, or force/torque/acceleration data for one or more joints of a robot or parts of another mechanical agent. Action data may include data for these actions and/or electronic control data such as motor control data, or more generally data for controlling one or more electronic devices within the environment the control of which has an effect on the observed state of the environment. For example in the case of an autonomous or semi-autonomous land or air or sea vehicle the actions may include actions to control navigation e.g. steering, and movement e.g. braking and/or acceleration of the vehicle.

In these applications the objectives, and associated rewards/costs may include, or be defined based upon the following:

i) One or more rewards for approaching or achieving one or more target locations, one or more target poses, or one or more other target configurations. One or more rewards dependent upon any of the previously mentioned observations e.g. robot or vehicle positions or poses. For example in the case of a robot a reward may depend on a joint orientation (angle) or velocity, an end-effector position, a center-of-mass position, or the positions and/or orientations of groups of body parts.

ii) One or more costs e.g. negative rewards, may be similarly defined. A negative reward or cost may also or instead be associated with force applied by an actuator or end-effector, e.g. dependent upon a threshold or maximum applied force when interacting with an object. A negative reward may also be dependent upon energy or power usage, excessive motion speed, one or more positions of one or more robot body parts e.g. for constraining movement.

Objectives based on these rewards may be associated with different preferences e.g. a high preference for safety-related objectives such as a work envelope or the force applied to an object.

A robot may be or be part of an autonomous or semi-autonomous moving vehicle. Similar objectives may then apply. Also or instead such a vehicle may have one or more objectives relating to physical movement of the vehicle such as objectives (rewards) dependent upon: energy/power use whilst moving e.g. maximum or average energy use; speed of movement; a route taken when moving e.g. to penalize a longer route over a shorter route between two points, as measured by distance or time. Such a vehicle or robot may be used to perform a task such as warehouse, logistics, or factory automation, e.g. collecting, placing, or moving stored goods or goods or parts of goods during their manufacture; or the task performed may comprise a package delivery control task. Thus one or more of the objectives may relate to such tasks, the actions may include actions relating to steering or other direction control actions, and the observations may include observations of the positions or motions of other vehicles or robots.

In some applications the agent may be an electronic agent and the observations may include data from one or more sensors monitoring part of a plant or service facility such as current, voltage, power, temperature and other sensors and/or electronic signals representing the functioning of electronic and/or mechanical items of equipment. The agent may control actions in a real-world environment including items of equipment, for example in a facility such as: a data center, server farm, or grid mains power or water distribution system, or in a manufacturing plant or service facility. The observations may then relate to operation of the plant or facility, e.g. they may include observations of power or water usage by equipment, or observations of power generation or distribution control, or observations of usage of a resource or of waste production. The actions may include actions controlling or imposing operating conditions on items of equipment of the plant/facility, and/or actions that result in changes to settings in the operation of the plant/facility e.g. to adjust or turn on/off components of the plant/facility. The objectives (to be maximized or minimized) may include one or more of: a measure of efficiency, e.g. resource usage; a measure of the environmental impact of operations in the environment, e.g. waste output; electrical or other power consumption; heating/cooling requirements; resource use in the facility e.g. water use; a temperature of the facility; a count of characteristics of items within the facility.

In some applications the environment may be a data packet communications network environment, and the agent may comprise a router to route packets of data over the communications network. The actions may comprise data packet routing actions and the observations may comprise e.g. observations of a routing table which includes routing metrics such as a metric of routing path length, bandwidth, load, hop count, path cost, delay, maximum transmission unit (MTU), and reliability. The objectives may include objectives to maximize or minimize one or more of the routing metrics.

In some other applications the agent is a software agent which manages distribution of tasks across computing resources e.g. on a mobile device and/or in a data center. In these implementations, the observations may include observations of computing resources such as compute and/or memory capacity, or Internet-accessible resources; and the actions may include assigning tasks to particular computing resources. The objectives may include objectives dependent upon (e.g. to maximize or minimize) one or more of: utilization of computing resources, electrical power, bandwidth, and computation speed.

Corresponding features to those previously described may also be employed in the context of the above system and computer storage media.

The subject matter described in this specification can be implemented in particular embodiments so as to realize one or more of the following advantages. The subject matter described in this specification introduces a reinforcement learning method for learning a policy where there are multiple, potentially conflicting, objectives. This is achieved by determining objective-specific action-value functions. By utilizing these objective-specific functions, the methodology described herein provides objective-specific functions that are scale invariant; that is, the scale of the reward for a given objective does not affect the relative weighting between objectives.

The scale invariance of the proposed methodology has two key advantages. Firstly, the weighting between objectives does not need to be adjusted over time as the size of the rewards vary. This particularly advantageous in reinforcement learning, where an agent is likely to become better at performing a task as it is trained, thereby resulting in larger rewards over time. Secondly, objectives with relatively larger rewards do not necessarily dominate the training. Furthermore, by making the weighting the objectives scale invariant with regard to rewards, the methodology is easier to put into practice, avoiding the need for continual trial and error when selecting the weighting for varying reward sizes. Specific implementations are presented herein that provide improvements in computational efficiency (e.g. through the use of non-parametric objective-specific policies).

Some implementations of the described techniques are able to learn to perform a task taking into account multiple different, potentially conflicting objectives. Unlike some prior art techniques the technology described herein can adapt to rewards or penalties of different scales, which may change over time. In principle the described techniques can be applied to any reinforcement learning system which uses action-value functions (e.g. Q-value functions), although it is particularly useful for MPO (maximum a posterior policy optimization). The described techniques allow a reinforcement learning system with multiple different objectives to learn faster and in a more stable manner, thus reducing memory and computing requirements compared with prior systems. The described techniques work with both discrete actions and on real-world, high-dimensional, continuous control tasks.

In implementations a preference variable ($\varepsilon_k$) is assigned to each objective to control a degree to which the objective contributes to the update of the combined action selection policy of a reinforcement learning system. This is used to adjust a "temperature" associated with the objective, used to scale the action (Q) value associated with the objective. In implementations the "temperature" relates to a diversity of the actions contributing to an evaluation of the overall action selection policy. Thus the weighting between objectives may be scale invariant even if the scale of the rewards changes or the Q function is non-stationary. This allows a user to a priori set preferences between the various objectives.

The details of one or more embodiments of the subject matter of this specification are set forth in the accompanying drawings and the description below.

BRIEF DESCRIPTION OF THE DRAWINGS

FIG. 1 shows an example neural network system for reinforcement learning.
FIG. 2 shows a method for training via multi-objective reinforcement learning according to an arrangement.
FIG. 3 shows a method for training via multi-objective reinforcement learning including a two-step policy update procedure according to an arrangement.

Like reference numbers and designations in the various drawings indicate like elements.

DETAILED DESCRIPTION

This specification describes techniques for learning where one or more agents are aiming to perform a task with multiple-competing objectives. This is common in the real world, where agents often have to balance competing objectives. For example, autonomous vehicles such as robots, may be required to complete a task (objective 1) whilst minimizing energy expenditure or damage to the environment (objective 2). Other examples of such agents include factory or plant automation systems, and computer systems. In such cases the agents may be the robots, items of equipment in the factory or plant, or software agents in a computer system which e.g. control the allocation of tasks to items of hardware or the routing of data on a communications network.

This specification generally describes a reinforcement learning system implemented as computer programs on one or more computers in one or more locations that selects actions to be performed by a reinforcement learning agent interacting with an environment by using a neural network. This specification also describes how such a system can adjust the parameters of the neural network.

In order to interact with the environment, the system receives data characterizing the current state of the environment and determines an action from an action space, i.e., a discrete action space or continuous action space, for the agent to perform in response to the received data. Data characterizing a state of the environment will be referred to in this specification as an observation. The agent performs the selected action which results in a change in the state of the environment.

In some implementations the environment is a simulated environment and the agent is implemented as one or more computers interacting with the simulated environment. For example a robot or vehicle may be trained in simulation before being used in a real-world environment.

In other implementations the environment is a real-world environment and the agent is a mechanical agent interacting with the real-world environment. For example, the agent may be a robot interacting with the environment to accomplish a specific task or an autonomous or semi-autonomous vehicle navigating through the environment. In these cases the observation can be data captured by one or more sensors of the agent as it interacts with the environment, e.g., a camera, a LIDAR sensor, a temperature sensor, and so forth.

Specific arrangements described herein provide methods for training a reinforcement learning system that has multiple, potentially conflicting objectives (multi-objective reinforcement learning).

Traditional reinforcement learning (RL) methods do an excellent job at training policies to optimize a single scalar reward function. However, many real-world tasks involve multiple, possibly competing, objectives. For instance, controlling energy systems may require trading off performance and cost; controlling autonomous cars may trade off fuel costs, efficiency, and safety; and controlling robotic arms may require trading off speed, energy efficiency and safety. Multi-objective reinforcement learning (MORL) methods aim to tackle such problems. One approach is scalarization: based on preferences across objectives, transform the multi-objective reward vector into a single scalar reward (e.g., by taking a convex combination), and then use standard RL to optimize this scalar reward.

It is difficult, though, for practitioners to pick the appropriate scalarization for a desired preference across objectives, because often objectives are defined in different units and/or scales. For instance, suppose we want an agent to complete a task while minimizing energy usage and mechanical wear-and-tear. Task completion may correspond to a sparse reward or to the number of square feet a vacuuming robot has cleaned, and reducing energy usage and mechanical wear-and-tear could be enforced by penalties on power consumption (in kWh) and actuator efforts (in N or Nm), respectively. Practitioners would need to resort to using trial and error to select a scalarization that ensures the agent prioritizes actually doing the task (and thus being useful) over saving energy.

To overcome this problem, the present application proposes a scale-invariant approach for encoding preferences, derived from the RL-as-inference perspective. Arrangements described herein learn an action-value function and an action distribution per objective that improves on the current policy. Then, to obtain a single updated policy that makes these trade-offs, supervised learning can be used to fit a policy to the combination of these action distributions.

In order to weight the relative objectives, instead of choosing a scalarization, practitioners set a constraint per objective. These constraints can control the influence of each objective on the policy, e.g. by constraining the KL-divergence between each objective-specific distribution and the current policy. The higher the constraint value, the more influence the objective has. Thus, a desired preference over objectives can be encoded as the relative magnitude of these constraint values.

Fundamentally, scalarization combines objectives in reward space. In contrast, the approach proposed herein combines objectives in distribution space thus making it invariant to the scale of rewards. In principle, this approach can be combined with any RL method, regardless of whether it is off-policy or on-policy. Specific arrangements described herein combine it with maximum a posteriori policy optimization (MPO), an off-policy actor-critic RL method, and V-MPO, an on-policy variant of MPO. These two methods are referred to herein as multi-objective MPO (MO-MPO) and multi-objective VMPO (MO-V-MPO), respectively.

Ultimately, the present methodology provides a distributional view on multi-objective reinforcement learning (MORL), which enables scale-invariant encoding of preferences. This is a theoretically-grounded approach, that arises from taking an RL-as-inference perspective of MORL. Empirically, the mechanics of MO-MPO have been analysed and shown that it finds all Pareto-optimal policies in a popular MORL benchmark task. MO-MPO and MO-V-MPO outperform scalarized approaches on multi-objective tasks across several challenging high-dimensional continuous control domains.

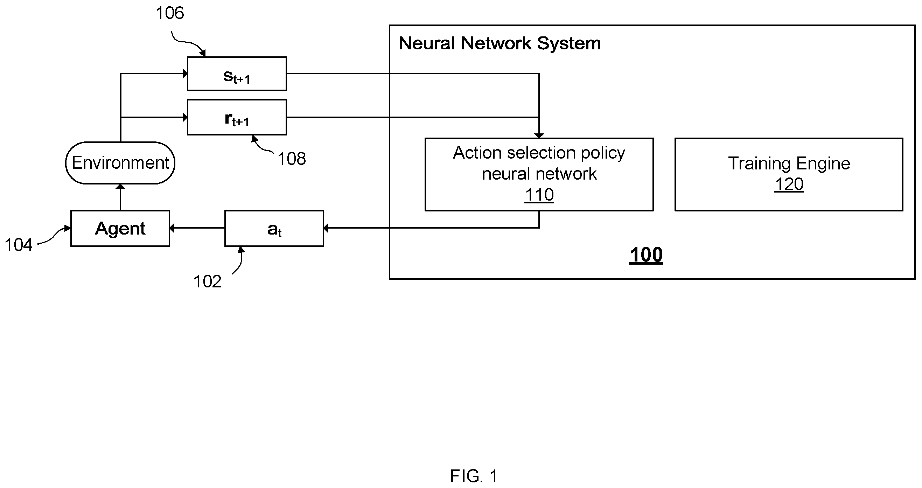

FIG. 1 shows an example neural network system 100 for reinforcement learning. The neural network system 100 is an example of a system implemented as computer programs on one or more computers in one or more locations in which the systems, components, and techniques described below are implemented.

The neural network system 100 includes an action selection policy neural network 110 that determines actions 102 that are output to an agent 104 for application to an environment. The neural network system 100 operates over a number of time steps t. Each action $a_t$ 102 is determined based on an observation characterizing a current state $s_t$ 106 of

the environment. Following the input of an initial observation characterizing an initial state $s_0$ 106 of the environment, the neural network system 100 determines an action $a_0$ 102 and outputs this action 102 to the agent 104. After the agent 104 has applied the action 102 to the environment 104, an observation of an updated state $s_1$ 106 is input into the neural network 100. The neural network 100 therefore operates over multiple time steps t to select actions $a_t$ 102 in response to input observations $s_t$ 106. Each action $a_t$ 102 is determined based on a policy $\pi_\theta$ which is dependent on a set of policy parameters $\theta$. In one arrangement, the action selection policy neural network 110 is a feedforward neural network, although other types of neural network may be utilized. For each time step, a set of rewards $r_t$ 108 for the previous action $a_{t-1}$ is also received. The set of rewards $r_t$ 108 includes a reward for each objective.

The observations may include an image of the environment and/or other sensor or input data from the environment. Such observations are typically pre-processed e.g. by one or more convolutional neural network layers, and/or one or more recurrent neural network layers.

The system 100 also includes a training engine 120 configured to update parameters of the policy based on the rewards 108 received for each objective. When training the neural network system 100, the system can operate over one or more time steps $t$, selecting one or more corresponding actions $a_t$ 102 based on the current state $s_t$ 108 and the current policy $\pi_\theta$, before the policy parameters $\theta$ are updated based on the rewards $r_t$ 108 for each action $a_t$ 102. Batch training can be utilized, where a given policy is applied to multiple time steps before it is updated.

Formally, the present arrangement applies a multi-objective RL problem defined by a multi-objective Markov Decision Process (MO-MDP). The MO-MDP consists of states $s \in \mathcal{S}$ and actions $a \in \mathcal{A}$, an initial state distribution $p(s_0)$ and transition probabilities $p(s_{t+1}|s_t, a_t)$ which define the probability of changing from state $s_t$ to $s_{t+1}$ when taking action $a_t$. In the present arrangement, the neural network system 100 applies multiple objectives. Accordingly, a reward function $\{r_k(s, a) \in \mathbb{R}\}_{k=1}^N$ is assigned for each objective $k$. A discount factor $\gamma \in [0,1)$ is provided for application to the rewards. A policy $\pi_\theta(a|s)$ is defined as a state conditional distribution over actions parametrized by $\theta$. Together with the transition probabilities, this gives rise to a state visitation distribution $\mu(s)$.

In addition to objective-specific rewards, an action-value function (Q-function) is provided for each objective. The action-value function maps states and actions to a value. The action-value function for objective $k$ is defined as the expected return (i.e., the cumulative discounted reward) from choosing action $a$ in state s for objective $k$ and then following policy $\pi$:  $Q_k^\pi(s, a) = \mathbb{E}_\pi[\sum_{t=0}^\infty \gamma^t r_k(s_t, a_t) | s_0 = s, a_0 = a]$ . This function can be represented using the recursive expression $$Q_k^\pi(s_t, a_t) = \mathbb{E}_{p(s_{t+1}|s_t, a_t)}[r_k(s_t, a_t) + \gamma V_k^\pi(s_{t+1})],$$ where $V_k^\pi(s) = \mathbb{E}_\pi[Q_k^\pi(s, a)]$ is the value function of $\pi$ for objective $k$.

During training, the system 100 attempts to identify an optimal policy. For any MO-MDP there is a set of nondominated policies, i.e., the Pareto front. A policy is nondominated if there is no other policy that improves its expected return for an objective without reducing the expected return of at least one other objective. Given a preference setting, the goal of the present methodology is to find a nondominated policy $\pi_\theta$ that satisfies those preferences. In the present approach, a setting of constraints does not directly correspond to a particular scalarization, but by varying these constraint settings, a Pareto front of policies can be traced out.

In general, the training involves a two-step approach to update the policy. Firstly, action distributions (objective-specific policies) are determined for each objective based on the corresponding action-value function. Then, the overall policy is fitted to a combination of the action distributions.

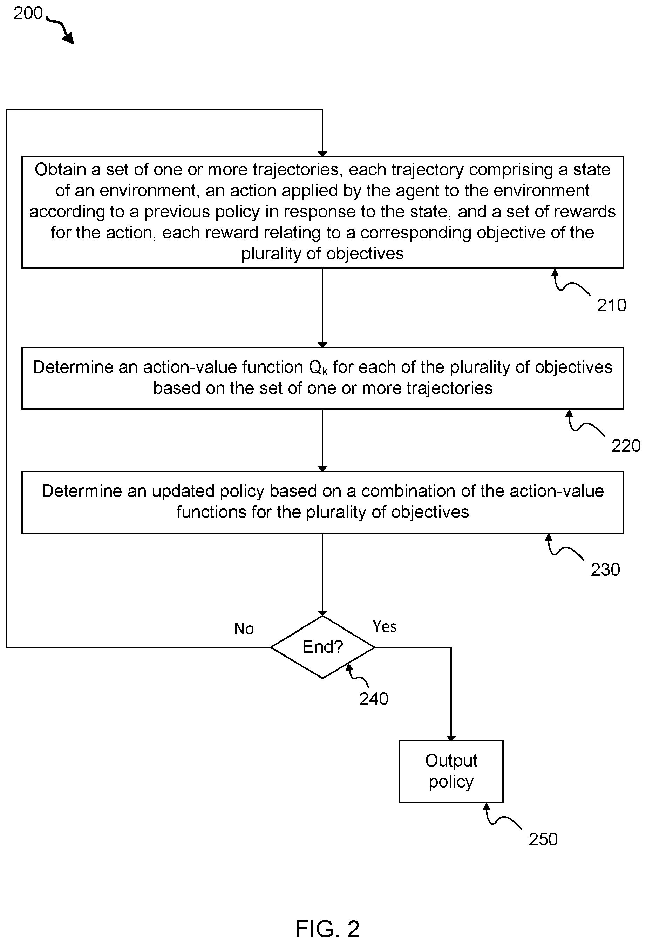

FIG. 2 shows a method for training via multi-objective reinforcement learning according to an arrangement. The method splits the reinforcement learning problem into two sub-problems and iterates until convergence:

1. Policy evaluation: estimate Q-functions given policy $\pi_\theta$
2. Policy improvement: update policy given Q-functions

Algorithm 1 summarizes this two-step multi-objective policy improvement procedure.

At each iteration of the training method, a set of trajectories are obtained 210, before an action-value function for each objective is determined 220. An updated policy is then determined based on a combination of the action-value functions 230. The method determines if an end criterion is reached 240 (e.g. a fixed number of iterations have been performed, or the policy meets a given level of performance). If not, then another iteration is performed based on the updated policy $\pi_\theta$. If so, then the policy is output 250 (e.g. stored locally or transmitted to an external device, e.g. an agent for implementing the policy).

Each trajectory comprises a state $s_t$, an action $a_t$ determined based on the policy $\pi_\theta$ and applied to the environment, and a set of rewards $r_t$ for that action $a_t$, over one or more timesteps $t$ (up to a total of $N$ timesteps). Each reward in the set of rewards $r_t$ for each action relates to a corresponding objective. Each reward can either be received from an external source (e.g. the environment) or can be determined based on the state $s_t$ of the environment (e.g. based on a corresponding reward function). In addition, multiple trajectories may be obtained over a number of episodes from a number of different starting states $s_0$ according to a batch size ($L$) defining the total number of episodes.

When determining an action-value function for each objective 220, this may be an update to a previous action-value function for the objective. This determination/update is based on the trajectories that have been obtained (i.e. based on the actions, states and rewards from the one or more trajectories). The specifics of this determination shall be discussed in more detail below.

---

**Algorithm 1** MO-MPO: One policy improvement step

1: **given** batch size ($L$), number of actions to sample ($M$), ($N$) Q-functions $\{Q_k^{\pi_{old}}(s,a)\}_{k=1}^N$, preferences $\{\epsilon_k\}_{k=1}^N$, previous policy $\pi_{old}$, previous temperatures $\{\eta_k\}_{k=1}^N$, replay buffer $\mathcal{D}$, first-order gradient-based optimizer $\mathcal{O}$

2:

3: **initialize** $\pi_\theta$ from the parameters of $\pi_{old}$

4: **repeat**

5:     // **Collect dataset** $\{s^i, a^{ij}, Q_k^{ij}\}_{i,j,k}^{L,M,N}$, **where**

6:     // $M$ **actions** $a^{ij} \sim \pi_{old}(a|s^i)$ **and** $Q_k^{ij} = Q_k^{\pi_{old}}(s^i, a^{ij})$

7:

8:     // **Compute action distribution for each objective**

9:     **for** k = 1, ..., N **do**

10:         $\delta_{\eta_k} \leftarrow \nabla_{\eta_k} \eta_k \epsilon_k + \eta_k \sum_i^L \frac{1}{L} \log\left(\sum_j^M \frac{1}{M} \exp\left(\frac{Q_k^{ij}}{\eta_k}\right)\right)$

11:         Update $\eta_k$ based on $\delta_{\eta_k}$, using optimizer $\mathcal{O}$

12:         $q_k^{ij} \propto \exp(\frac{Q_k^{ij}}{\eta_k})$

13:     **end for**

14:

15:     // **Update parametric policy**

16:     $\delta_\pi \leftarrow -\nabla_\theta \sum_i^L \sum_j^M \sum_k^N q_k^{ij} \log \pi_\theta(a^{ij}|s^i)$

17:         (subject to additional KL regularization)

18:     Update $\pi_\theta$ based on $\delta_\pi$, using optimizer $\mathcal{O}$

19:

20: **until** fixed number of steps

21: return $\pi_{old} = \pi_\theta$

---

Multi-Objective Policy Evaluation

The neural network system evaluates the previous policy $\pi_{old}$ by learning state-action value (Q) functions. A separate Q-function is trained per objective, following a Q-decomposition approach. In principle, any Q-learning algorithm can be used, as long as the target Q-value is computed with respect to $\pi_{old}$ (the policy prior to the current iteration of the update).

In general, Q-learning aims to learn an approximation of the action-value function. To achieve this, the following update may be applied at each iteration of training to learn a Q-function $Q_k^{\pi_{old}}(s,a)$ for each objective $k$, parameterized by $\phi_k$:

$$Q_k^{\pi_{old}}(S,A;\ \phi_k) \leftarrow Q_k^{\pi_{old}}(S,A;\phi_k) + \alpha[\hat{Q}_k(S,A,R) - Q_k^{\pi_{old}}(S,A;\phi_k)]$$

where $\hat{Q}_k(S, A, R)$ is a target action-value function (a target Q-function) based on state $S$, action $A$ and reward $R$ vectors. The target Q-value is an estimate of the sum of discounted rewards (e.g. as determined from one or more trajectories obtained by running the policy).

Different types of target Q-functions exist, and are equally applicable to the present methodology. In a specific implementation, a Retrace objective is used to learn the Q-function $Q_k^{\pi_{old}}(s, a)$ for each objective $k$, parameterized by $\phi_k$, as follows:

$$\min_{\{\phi_k\}_1^N} \sum_{k=1}^N \mathbb{E}_{(s_t, a_t) \sim \mathcal{D}} \left[ \left( \hat{Q}_k^{\text{ret}}(s_t, a_t) - Q_k^{\pi_{old}}(s_t, a_t; \phi_k) \right)^2 \right]$$

where $\hat{Q}_k^{\text{ret}}$ is the Retrace target for objective $k$ and the previous policy $\pi_{\text{old}}$, and $\mathcal{D}$ is a replay buffer containing gathered transitions (state-action pairs). This minimizes the mean squared error between the Retrace target and the Q-function being learned.

In this implementation, the Retrace target is as follows:

$$\hat{Q}_k^{\text{ret}}(s_t, a_t) = \hat{Q}_k^{\pi_{old}}(s_t, a_t; \phi_k) + \sum_{j=t}^T \gamma^{j-t} \left( \prod_{z=t+1}^j c_z \right) \delta^j$$

where

$$\delta^j = r_k(s_j, a_j) + \gamma V(s_{j+1}) - \hat{Q}_k^{\pi_{old}}(s_j, a_j; \phi_k)$$

$$V(s_{j+1}) = \mathbb{E}_{\pi_{\text{old}}(a|s_{j+1})} \left[ \hat{Q}_k^{\pi_{old}}(s_{j+1}, a; \phi_k) \right]$$

The importance weights $c_z$ are defined as

$$c_z = \min \left( 1, \frac{\pi_{\text{old}}(a_z|s_z)}{b(a_z|s_z)} \right)$$

where $b(a_z|s_z)$ denotes a behaviour policy used to collect trajectories in the environment. When $j = t$, the method sets $\left( \prod_{z=t+1}^j c_z \right) = 1$.

In a specific implementation, two networks for the Q-functions are maintained for each objective, one online network and one target network, with parameters denoted by $\phi_k$ and $\phi'_k$, respectively. Similarly one online network and one target network may be maintained for the policy, with parameters denoted by $\theta$ and $\theta'$, respectively. Target networks may be updated every fixed number of steps by copying parameters from the online network. Online networks may be updated using any appropriate update method, such as gradient descent, in each learning iteration. The target policy network is referred to above as the old policy, $\pi_{\text{old}}$.

In a specific implementation, an asynchronous actor-learner setup may be used, in which actors regularly fetch policy parameters from the learner and act in the environment, writing these transitions to the replay buffer. This policy is referred to as the behavior policy. The learner uses the transitions in the replay buffer to update the (online) Q-functions and the policy. This methodology is shown in more detail in Algorithm 2.

Algorithm 2 is a method of obtaining trajectories based on a given policy $\pi_\theta$. The system fetches the current policy parameters $\theta$ defining the current policy $\pi_\theta$. The system then collects a set of trajectories over a number of time steps $T$. Each trajectory $\tau$ includes a state $s_t$, an action $a_t$ and a set of rewards $r$ for each of the timesteps. The set of rewards $r$ includes a reward $r_k$ for each objective. The system obtains the trajectory $\tau$ by determining, for each time step, an action $a_t$ based on the current state $s_t$ and based on the current policy $\pi_\theta$ and determining rewards from the next state $s_{t+1}$ that results from the action being performed based on a set of reward functions $\{r_k(s, a)\}_{k=1}^N$. A trajectory $\tau$ is obtained for each of a number $L$ of episodes. Each trajectory $\tau$ is stored in the replay buffer $\mathcal{D}$. The stored trajectories are then used to update the Q-function for each objective.

---

**Algorithm 2** MO-MPO: Asynchronous Actor

1: **given** (N) reward functions $\{r_k(s,a)\}_{k=1}^N$, $T$ steps per episode
2: **repeat**
3:     Fetch current policy parameters $\theta$ from learner
4:     **// Collect trajectory from environment**
5:     $\tau = \{\}$
6:     **for** $t = 0, \ldots, T$ **do**
7:         $a_t \sim \pi_{\boldsymbol{\theta}}(\cdot|s_t)$
8:         **// Execute action and determine rewards**
9:         $r = [r_1(s_t, a_t), \ldots, r_N(s_t, a_t)]$
10:        $\tau \leftarrow \tau \cup \{(s_t, a_t, r, \pi_{\boldsymbol{\theta}}(a_t|s_t))\}$
11:     **end for**
12:     Send trajectory $\tau$ to replay buffer
13: **until** end of training

---

Multi-Objective Policy Improvement

Given the previous policy $\pi_{old}(a|s)$ and associated Q-functions $\left\{Q_k^{\pi_{old}}(s,a)\right\}_{k=1}^N$ next step is to improve the previous policy for a given visitation distribution $\mu(s)$. This may be achieved by drawing from the replay buffer to estimate expectations over the visitation distribution. To this end, the system learns an action distribution (an objective-specific policy) for each Q-function and combines these to obtain the next policy $\pi_{new}(a|s)$.

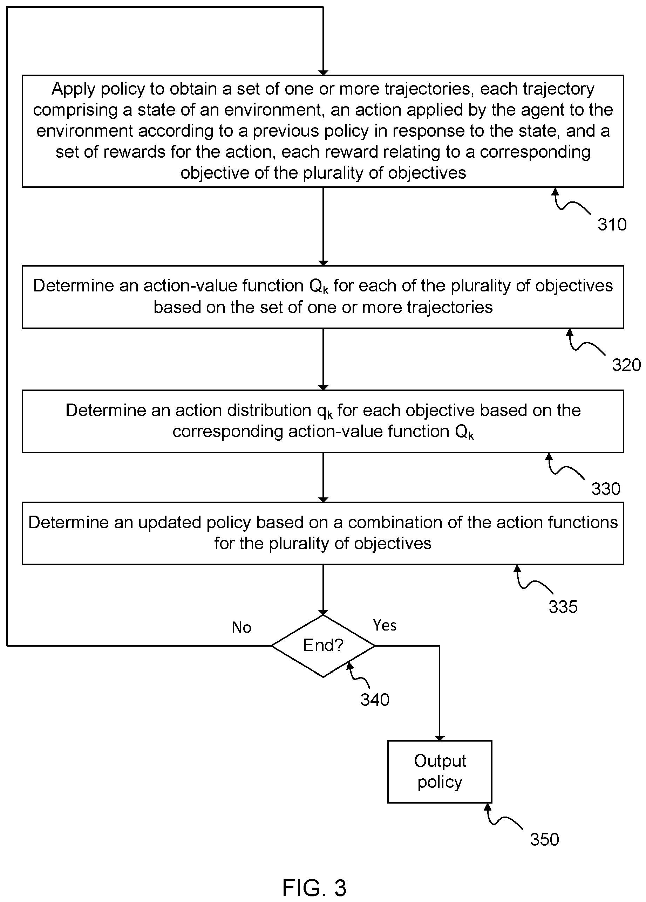

FIG. 3 shows a method for training via multi-objective reinforcement learning including a two-step policy update procedure according to an arrangement. The method broadly matches the method of FIG. 2, however the policy update step has been replaced with two steps:

1. Determining an action distribution for each objective based on the corresponding action-value function 330.
2. Determining an updated policy based on a combination of the action functions for the plurality of objectives 335.

In the first step 330, for each objective $k$ an improved action distribution $q_k(a|s)$ is learned such that $\mathbb{E}_{q_k(a|s)}\left[Q_k^{\pi_{old}}(s,a)\right] \geq \mathbb{E}_{\pi_{old}(a|s)}\left[Q_k^{\pi_{old}}(s,a)\right]$, where states $s$ are drawn from a visitation distribution $\mu(s)$ (e.g. taken from the replay buffer). In other words, an improved action distribution $q_k(a|s)$ is learned such that the expectation of the Q-function with respect to the action distribution is greater than or equal to the expectation of the Q-function with respect to the policy.

In the second step 335, the improved distributions $q_k$ are combined and distilled into a new parametric policy $\pi_{new}$ (with parameters $\theta_{new}$) by minimizing the difference between the distributions and the new parametric policy. This can be achieved by minimizing the KL-divergence between the distributions and the new parametric policy, i.e.,

$$\theta_{new} = \underset{\theta}{\arg\min} \sum_{k=1}^N \mathbb{E}_{\mu(s)}\left[\mathrm{KL}\big(q_k(a|s)||\pi_\theta(a|s)\big)\right]$$

where $\mathrm{KL}(q_k(a|s)||\pi_\theta(a|s))$ is the Kullback-Leibler divergence between an action distribution $q_k(a|s)$ for objective $k$ and the policy $\pi_\theta(a|s)$. This is a supervised learning loss that determines a maximum likelihood estimate of each distribution $q_k$. Next, these two steps will be explained in more detail.

Obtaining Action Distributions Per Objective (Step 1)

To obtain the per-objective improved action distributions $q_k(a|s)$, the reinforcement learning objective is optimized for each objective $Q_k$:

$$\max_{q_k} \int_s \mu(s) \int_a q_k(a|s) Q_k(s,a)\, \mathrm{d}a\, \mathrm{d}s$$

$$\mathrm{s.t.} \int_s \mu(s)\, \mathrm{KL}\big(q_k(a|s)||\pi_{\mathrm{old}}(a|s)\big)\, \mathrm{d}s < \epsilon_k$$

where $\varepsilon_k$ denotes the allowed expected KL divergence for objective $k$. These $\varepsilon_k$ are used to encode preferences over the objectives. More concretely, $\varepsilon_k$ defines the allowed influence of objective $k$ on the change on policy.

For nonparametric action distributions $q_k(a|s)$ this constrained optimization problem can be solved in closed form for each state s sampled from $\mu(s)$,

$$q_k(a|s) \propto \pi_{\mathrm{old}}(a|s) \exp\left(\frac{Q_k(s,a)}{\eta_k}\right)$$

where the temperature $\eta_k$ is computed based on the corresponding $\varepsilon_k$ by solving the following convex dual function:

$$\eta_k = \operatorname*{argmin}_{\eta} \eta \epsilon_k + \eta \int_s \mu(s) \log \int_a \pi_{\mathrm{old}}(a|s) \exp\left(\frac{Q_k(s,a)}{\eta_k}\right) \mathrm{d}a\, \mathrm{d}s$$

In order to evaluate $q_k(a|s)$ and the integrals above, the system can draw $L$ states from the replay buffer and, for each state, samples $M$ actions from the current policy $\pi_{\mathrm{old}}$. In practice, one temperature parameter $\eta_k$ is maintained per objective. We have found that optimizing the dual function by performing a few steps of gradient descent on $\eta_k$ is effective. The method is initialized with the solution found in the previous policy iteration step. Since $\eta_k$ should be positive, a projection operator can be used after each gradient step to maintain $\eta_k > 0$.

As shown in Algorithm 1, the action distribution $q_k(a|s)$ for each objective can be calculated by calculating:

$$\delta_{\eta_k} \leftarrow \nabla_{\eta_k} \eta_k \epsilon_k + \eta_k \sum_i^L \frac{1}{L} \log\left(\sum_j^M \frac{1}{M} \exp\left(\frac{Q_k^{i,j}}{\eta_k}\right)\right),$$

updating $\eta_k$ based on $\delta_{\eta_k}$ using an optimizer, and then determining the action distribution $q_k(a|s)$

$$q_k(a|s) \propto \pi_{\mathrm{old}}(a|s) \exp\left(\frac{Q_k(s,a)}{\eta_k}\right).$$

Since the constraints $\varepsilon_k$ encode the preferences over objectives, solving this optimization problem with good satisfaction of constraints is important for learning a policy that satisfies the desired preferences. For nonparametric action distributions $q_k(a|s)$, these constraints can be satisfied exactly. One could use any policy gradient method to obtain $q_k(a|s)$ in a parametric form instead. However, solving the constrained optimization for parametric $q_k(a|s)$ is not exact, and the constraints may not be well satisfied, which impedes the use of $\varepsilon_k$ to encode preferences. Moreover, assuming a parametric $q_k(a|s)$ requires maintaining a function approximator (e.g., a neural network) per objective, which can significantly increase the complexity of the algorithm and limits scalability.

Fitting a New Parametric Policy (Step 2)

In the previous section, for each objective k, an improved action distribution $q_k(a|s)$ (an improved objective-specific policy) has been obtained. Next, these distributions need to be combined to obtain a single parametric policy that trades off the objectives according to the constraints $\varepsilon_k$ that have been set. For this, the method solves a supervised learning problem that fits a parametric policy to the per-objective action distributions from step 1,

$$\theta_{\text{new}} = \underset{\theta}{\arg\max} \sum_{k=1}^{N} \int_{S} \mu(s) \int_{a} q_k(a|s) \log \pi_\theta(a|s) \, \mathrm{d}a \, \mathrm{d}s$$

$$\text{s.t.} \int_{S} \mu(s) \, \mathrm{KL}\big(\pi_{\text{old}}(a|s) || \pi_\theta(a|s)\big) \, \mathrm{d}s < \beta,$$

where $\theta$ are parameters of the policy neural network and the KL constraint enforces a trust region of size $\beta$ that limits the overall change in the parametric policy. The KL constraint in this step has a regularization effect that prevents the policy from overfitting to the sample-based action distributions, and therefore avoids premature convergence and improves stability of learning.

Similar to the first policy improvement step, the integrals can be evaluated by using the L states sampled from the replay buffer and the M actions per state sampled from the old policy. In order to optimize the above using gradient descent, Lagrangian relaxation can be implemented.

As shown in Algorithm 1, the policy $\pi_\theta(a|s)$ can be updated by calculating:

$$\delta_\pi \leftarrow -\nabla_\theta \sum_{i}^{L} \sum_{j}^{M} \sum_{k}^{N} q_k^{i,j} \log \pi_\theta\big(a^{i,j}|s^i\big)$$

subject to the above regularization constraint. The policy parameters can then be updated based on $\delta_\pi$ using an optimizer (e.g. via gradient descent).

<u>On-Policy Learning</u>

The above implementations discuss batch learning. The methodology described herein can be equally applied to on-policy learning. In this case, to evaluate the previous policy $\pi_{\text{old}}$ advantages $A(s, a)$ are estimated from a learned state-value function $V(s)$, instead of a state-action value function $Q(s, a)$ as in the off-policy implementations. A separate V-function for each objective is trained by regressing to an n-step return associated with each objective.

More concretely, given trajectory snippets $\tau = \{(s_0, a_0, r_0), \ldots, (s_T, a_T, r_T)\}$ where $r_t$ denotes a reward vector $\{r_k(s_t, a_t)\}_{k=1}^{N}$ that consists of rewards for all N objectives, value function parameters $\phi_k$ are found by optimizing the following objective:

$$\min_{\{\phi_k\}_1^N} \sum_{k=1}^{N} \mathbb{E}_\tau \left[ \left( G^{(T)}(s_t, a_t) - V_{\phi_k}^{\pi_{\text{old}}}(s_t) \right)^2 \right].$$

Here $G^{(T)}(s_t, a_t)$ is the T-step target for value function k, which uses the actual rewards in the trajectory and bootstraps from the current value function for the rest: $G_k^{(T)}(s_t, a_t) = \sum_{l=t}^{T-1} \gamma^{l-t} r_k(s_l, a_l) + \gamma^{T-t} V_{\phi_k}^{\pi_{\text{old}}}(s_{l+T})$ . The advantages are then estimated as $A_k^{\pi_{\text{old}}}(s_t, a_t) =$ .

Given the previous policy $\pi_{\text{old}}(a|s)$ and estimated advantages $\left\{ A_k^{\pi_{\text{old}}}(s, a) \right\}_{k=1,\ldots,N}$ associated with this policy for each objective, the goal is to improve the previous policy. To this end, the method first learns an improved variational distribution $q_k(s, a)$ for each objective, and then combines and distils the variational distributions into a new parametric policy $\pi_{\text{new}}(a|s)$. Unlike in the off-policy implementations, this implementation uses the joint distribution $q_k(s, a)$ rather than local policies $q_k(s|a)$ because, without a learned Q-function, only one action per state is available for learning. Each joint distribution provides a probability of state-action pairs given a corresponding objective.

In order to obtain the improved variational distributions $q_k(s, a)$, the method optimizes the RL objective for each objective

$$\max_{q_k} \int_{s,a} q_k(s,a) A_k(s,a) \, \mathrm{d}a \, \mathrm{d}s$$

$$\text{s.t.} \quad \mathrm{KL}(q_k(s,a) \| p_{\mathrm{old}}(s,a)) < \epsilon_k,$$

where the KL-divergence is computed over all $(s, a)$, $\varepsilon_k$ denotes the allowed expected KL divergence, and $p_{\mathrm{old}}(s, a) = \mu(s)$ $\pi_{\mathrm{old}}(a|s)$ is the state-action distribution associated with $\pi_{\mathrm{old}}$.

As in the off-policy implementations, this on-policy implementation uses $\varepsilon_k$ to define the preferences over objectives. More concretely, $\varepsilon_k$ defines the allowed contribution of objective $k$ to the change of the policy. Therefore, the larger a particular $\varepsilon_k$ is with respect to others, the more that objective $k$ is preferred. On the other hand, if $\varepsilon_k = 0$, then objective $k$ will have no contribution to the change of the policy and will effectively be ignored.

The above equation can be solved in closed form:

$$q_k(s,a) \propto p_{\mathrm{old}}(s,a) \exp\left(\frac{A_k(s,a)}{\eta_k}\right),$$

where the temperature $\eta_k$ is computed based on the constraint $\varepsilon_k$ by solving the following convex dual problem

$$\eta_k = \operatorname*{argmin}_{\eta_k} \left[ \eta_k \epsilon_k + \eta_k \log \int_{s,a} p_{\mathrm{old}}(s,a) \exp\left(\frac{A_k(s,a)}{\eta_k}\right) \mathrm{d}a \, \mathrm{d}s \right].$$

The optimization can be performed along with the loss by taking a gradient descent step on $\eta_k$, and this can be initialized with the solution found in the previous policy iteration step. Since $\eta_k$ must be positive, a projection operator can be used after each gradient step to maintain $\eta_k > 0$.

In practice, training can be performed using samples corresponding to a proportion of the largest advantages (e.g. the top 50%) in each batch of data.

The next step is to combine and distil the state-action distributions obtained in the previous step into a single parametric policy $\pi_{\mathrm{new}}(a|s)$ that favours all of the objectives according to the preferences specified by $\varepsilon_k$. For this a supervised learning problem can be solved that fits a parametric policy as follows:

$$\pi_{\mathrm{new}} = \operatorname*{argmax}_{\theta} \sum_{k=1}^{N} \int_{s,a} q_k(s,a) \log \pi_\theta(a|s) \, \mathrm{d}a \, \mathrm{d}s$$

$$\text{s.t.} \int_{s,a} \mathrm{KL}(\pi_{\mathrm{old}}(a|s) \| \pi_\theta(a|s)) \, \mathrm{d}s < \beta,$$

where $\theta$ are the parameters of the function approximator (a neural network), which are initialized from the weights of the previous policy $\pi_{\mathrm{old}}$, and the KL constraint enforces a trust region of size $\beta$ that limits the overall change in the parametric policy, to improve stability of learning. As in the off-policy implementations, the KL constraint in this step has a regularization effect that prevents the policy from overfitting to the local policies and therefore avoids premature convergence.

In order to optimize the above equation, Lagrangian relaxation may be employed. Selecting $\varepsilon_k$

It is more intuitive to encode preferences via $\varepsilon_k$ rather than via scalarization weights, because the former is invariant to the scale of rewards. In other words, having a desired preference across objectives narrows down the range of reasonable choices for $\varepsilon_k$, but does not narrow down the range of reasonable choices for scalarization weights. In order to identify reasonable scalarization weights, a RL practitioner needs to additionally be familiar with the scale of rewards for each objective. In practice, we have found that learning performance is robust to a wide range of scales for $\varepsilon_k$. It is the relative scales of the $\varepsilon_k$ that matter for encoding preferences over objectives - the larger a particular $\varepsilon_k$ is with respect to others, the more that objective $k$ is preferred. On the other hand, if $\varepsilon_k = 0$, then objective $k$ will have no influence and will effectively be ignored. In general, specific implementations apply $\varepsilon_k$ in the range of 0.001 to 0.1.

When all objectives are equally important, the general rule is to set all $\varepsilon_k$ to the same value. In contrast, it can be difficult to choose appropriate weights in linear scalarization to encode equal preferences - setting all weights equal to $1/K$

(where $K$ is the number of objectives) is only appropriate if the objectives' rewards are of similar scales.

Even when setting all $\varepsilon_k$ to the same value, the absolute value of $\varepsilon_k$ will have an effect on the learning. The larger $\varepsilon_k$ is, the more influence the objectives will have on the policy update step. Since the per-objective critics are learned in parallel with the policy, setting $\varepsilon_k$ too high tends to destabilize learning, because early on in training, when the critics produce unreliable Q-values, their influence on the policy will lead it in the wrong direction. On the other hand, if $\varepsilon_k$ is set too low, then it slows down learning, because the per-objective action distribution is only allowed to deviate by a tiny amount from the current policy, and the updated policy is obtained via supervised learning on the combination of these action distributions. Nevertheless, the learning eventually will converge to more or less the same policy, as long as $\varepsilon_k$ is not set too high.

When there is a difference in preferences across objectives, the relative scale of $\varepsilon_k$ is what matters. The more the relative scale of $\varepsilon_k$ is compared to $\varepsilon_l$, the more influence objective $k$ has over the policy update, compared to objective $l$. In the extreme case, when $\varepsilon_l$ is near-zero for objective $l$, then objective $l$ will have no influence on the policy update and will effectively be ignored.

One common example of unequal preferences is when an agent is required to complete a task, while minimizing other objectives - e.g., energy expenditure, force applied (e.g. a "pain" penalty), etc. In this case, the $\varepsilon$ for the task objective should be higher than that for the other objectives, to incentivize the agent to prioritize actually doing the task. If the $\varepsilon$ for the penalties is too high, then the agent will care more about minimizing the penalty (which can typically be achieved by simply taking no actions) rather than doing the task, which is not particularly useful.

The scale of $\varepsilon_k$ has a similar effect as in the equal preference case. If the scale of $\varepsilon_k$ is too high or too low, then the same issues arise as discussed for equal preferences. If all $\varepsilon_k$ increase or decrease in scale by the same (moderate) factor, and thus their relative scales remain the same, then typically they will converge to more or less the same policy. As mentioned, $\varepsilon_k$ in the range of 0.001 to 0.1 can achieve good results.

The subject matter described in this specification introduces a reinforcement learning method for learning a policy where there are multiple, potentially conflicting, objectives. This is achieved by determining objective-specific action-value functions. By utilizing these objective-specific functions, the methodology described herein provides objective-specific functions that are independent of the scale of the reward for a given objective. This means that the weighting between objectives does not need to be adjusted over time as the size of the rewards vary. In addition, larger rewards do not necessarily dominate the training. Furthermore, by making the weighting the objectives scale invariant with regard to rewards, the methodology is easier to put into practice, avoiding the need for continual trial and error when selecting the weighting for varying reward sizes. Specific implementations are presented herein that provide improvements in computational efficiency (e.g. through the use of non-parametric objective-specific policies).

In certain implementations a preference variable ($\varepsilon_k$) is assigned to each objective to control a degree to which the objective contributes to the update of the combined action selection policy of a reinforcement learning system. This is used to adjust a "temperature" associated with the objective, used to scale the action (Q) value associated with the objective. In implementations, the "temperature" relates to a diversity of the actions contributing to an evaluation of the overall action selection policy. Thus, the weighting between objectives may be scale invariant even if the scale of the rewards changes or the Q function is non-stationary. This allows a user to a priori set preferences between the various objectives.

For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory program carrier for execution by, or to control the operation of, data processing apparatus. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus. The computer storage medium can be a machine-readable storage device, a machine-readable storage substrate, a random or serial access memory device, or a combination of one or more of them. The computer storage medium is not, however, a propagated signal.

The term "data processing apparatus" encompasses all kinds of apparatus, devices, and machines for processing data, including by way of example a programmable processor, a computer, or multiple processors or computers. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, or a combination of one or more of them.

A computer program (which may also be referred to or described as a program, software, a software application, a module, a software module, a script, or code) can be written in any form of programming language, including compiled or interpreted languages, or declarative or procedural languages, and it can be deployed in any form, including as a stand alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a communication network.

As used in this specification, an "engine," or "software engine," refers to a software implemented input/output system that provides an output that is different from the input. An engine can be an encoded block of functionality, such as a library, a platform, a software development kit ("SDK"), or an object. Each engine can be implemented on any appropriate type of computing device, e.g., servers, mobile phones, tablet computers, notebook computers, music players, e-book readers, laptop or desktop computers, PDAs, smart phones, or other stationary or portable devices, that includes one or more processors and computer readable media. Additionally, two or more of the engines may be implemented on the same computing device, or on different computing devices.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit). For example, the processes and logic flows can be performed by and apparatus can also be implemented as a graphics processing unit (GPU).

Computers suitable for the execution of a computer program include, by way of example, can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

## EP 4 085 392 B1

**Claims**

1. A computer-implemented method for training a neural network system (100) by reinforcement learning, the neural network system comprising a neural network configured to receive an input observation characterizing a state (106) of an environment interacted with by an agent (104) and to select and output an action (102) in accordance with a policy that is encoded in a set of policy parameters of the neural network and that aims to satisfy a plurality of objectives, the method comprising:

   obtaining (210, 310) a set of one or more trajectories, each trajectory comprising a state (106) of the environment, an action applied by the agent to the environment according to a previous policy in response to the state, and a set of rewards (108) for the action, each reward relating to a corresponding objective of the plurality of objectives; determining (220, 320) an action-value function for each of the plurality of objectives based on the set of one or more trajectories, each action-value function determining an action value representing an estimated return according to the corresponding objective that would result from the agent performing a given action in response to a given state according to the previous policy; and
   determining (230, 335) an updated policy based on a combination of the action-value functions for the plurality of objectives, determining the updated policy comprising:

   determining an objective-specific policy for each objective in the plurality of objectives, each objective-specific policy being determined based on the corresponding action-value function for the corresponding objective, wherein determining the objective-specific policy for each objective comprises determining objective-specific policy parameters for the objective-specific policy that maximize the expected return according to the action-value function for the corresponding objective relative to the previous policy, subject to a constraint that the objective-specific policy may not differ from the previous policy by more than a corresponding difference threshold; and
   determining the updated policy by fitting the set of policy parameters to a

   combination of the objective-specific policies,

   and wherein:

   (i) the environment is a real-world environment and the agent is a mechanical agent interacting with the real-world environment; or
   (ii) the agent is an electronic agent, the observations include data from one or more sensors monitoring part of a plant or service facility including items of equipment, the observations relate to operation of the plant or facility, the actions include actions controlling or imposing operating conditions on the items of equipment, and/or actions that result in changes to settings in the operation of the plant/facility, and the objectives include one or more of: a measure of efficiency; electrical or other power consumption; heating/cooling requirements; resource use in the facility; a temperature of the facility; a count of characteristics of items within the facility; or
   (iii) the environment is a data packet communications network environment, the agent comprises a router to route packets of data over the communications network, the actions comprise data packet routing actions, the observations comprise observations of a routing table which includes routing metrics, and the objectives include objectives to maximize or minimize one or more of the routing metrics; or
   (iv) the agent is a software agent which manages distribution of tasks across computing resources, the observations include observations of computing resources, and the objectives are dependent upon one or more of: utilization of computing resources, electrical power, bandwidth, and computation speed.

2. The method of claim 1, wherein: fitting the set of policy parameters of the updated policy to the combination of the objective-specific policies comprises determining the set of policy parameters that minimizes a difference between the updated policy and the combination of the objective-specific policies.

3. The method of claim 1 or claim 2 wherein the set of policy parameters for the updated policy are constrained such that the difference between the updated policy and the previous policy cannot exceed a trust region threshold.

4. The method of any of claims 1-3 wherein the corresponding difference threshold represents the relative contribution of the corresponding objective to the updated policy.

5. The method of any of claims 1-4 wherein the objective-specific policies are non-parametric policies.

6. The method of any of claims 1-5 wherein each objective-specific policy, $q_k(a|s)$, is determined from a scaled action-value function for the objective of the objective-specific policy, wherein the scaled action-value function is scaled by a value dependent upon a preference for the objective.

7. The method of claim 6 wherein the value dependent upon a preference for the objective is dependent on the difference threshold for the objective.

8. The method of any of claims 5-7 wherein each objective-specific policy, $q_k(a|s)$, is determined by calculating:

$$q_k(a|s) = N\,\pi_{old}(a|s)\exp\left(\frac{Q_k(s,a)}{\eta_k}\right)$$

where:

$N$ is a normalization constant;
$k$ is the objective;
$a$ is an action;
$s$ is a state;
$\pi_{old}(a|s)$ is the previous policy;
$Q_k(s, a)$ is the action-value function for the objective; and
$\eta_k$ is a temperature parameter.

9. The method of claim 8 wherein, for each objective, $k$, the temperature parameter $\eta_k$ is determined by solving the following equation:

$$\eta_k = \operatorname*{argmin}_{\eta} \eta\epsilon_k + \eta \int_s \mu(s)\log\int_a \pi_{old}(a|s)\exp\left(\frac{Q_k(s,a)}{\eta}\right)\mathrm{d}a\,\mathrm{d}s$$

where:

$\varepsilon_k$ is the difference threshold for the corresponding objective; and
$\mu(s)$ is a visitation distribution.

10. The method of claim 9 wherein each temperature parameter is determined via gradient descent.

11. The method of any preceding claim wherein:

each action-value function provides a distribution of action values for a corresponding objective of the plurality of objectives across a range of potential state-action pairs for the previous policy, and/or
each action-value function outputs an action-value representing the expected cumulative discounted reward for the corresponding objective when choosing a given action in response to a given state.

12. A system comprising one or more computers and one or more storage devices storing instructions that when executed by the one or more computers cause the one or more computers to perform the method of any one of claims 1-11.

13. One or more computer storage media storing instructions that when executed by one or more computers cause the one or more computers to perform the method of any one of claims 1-11.

**Patentansprüche**

1. Computerimplementiertes Verfahren zum Trainieren eines neuronalen Netzwerksystems (100) durch Verstärkungslernen, wobei das neuronale Netzwerksystem ein neuronales Netzwerk umfasst, das konfiguriert ist zum Empfangen einer Eingabebeobachtung, die einen Zustand (106) einer Umgebung kennzeichnet, mit der ein Agent (104) interagiert, und zum Auswählen und Ausgeben einer Aktion (102) gemäß einer Strategie, die in einem Satz von Strategieparametern des neuronalen Netzwerks kodiert ist und die darauf abzielt, eine Vielzahl von Zielen zu erfüllen, wobei das Verfahren umfasst:

Erhalten (210, 310) eines Satzes von einer oder mehreren Trajektorien, wobei jede Trajektorie einen Zustand (106) der Umgebung, eine Aktion, die vom Agenten auf die Umgebung gemäß einer vorherigen Strategie als Reaktion auf den Zustand angewendet wurde, und einen Satz von Belohnungen (108) für die Aktion umfasst, wobei sich jede Belohnung auf ein entsprechendes Ziel der Vielzahl von Zielen bezieht;

Bestimmen (220, 320) einer Aktionswertfunktion für jedes der Vielzahl von Zielen basierend auf dem Satz von einer oder mehreren Trajektorien, wobei jede Aktionswertfunktion einen Aktionswert bestimmt, der eine geschätzte Rendite gemäß dem entsprechenden Ziel darstellt, die sich daraus ergeben würde, dass der Agent eine gegebene Aktion als Reaktion auf einen gegebenen Zustand gemäß der vorherigen Strategie durchführt; und Bestimmen (230, 335) einer aktualisierten Strategie basierend auf einer Kombination der Aktionswertfunktionen für die Vielzahl von Zielen, wobei das Bestimmen der aktualisierten Strategie umfasst:

Bestimmen einer zielspezifischen Strategie für jedes Ziel in der Vielzahl von Zielen, wobei jede zielspezifische Strategie basierend auf der entsprechenden Aktionswertfunktion für das entsprechende Ziel bestimmt wird, wobei das Bestimmen der zielspezifischen Strategie für jedes Ziel das Bestimmen von zielspezifischen Strategieparametern für die zielspezifische Strategie umfasst, die die erwartete Rendite gemäß der Aktionswertfunktion für das entsprechende Ziel relativ zur vorherigen Strategie maximieren, unter der Bedingung, dass die zielspezifische Strategie nicht um mehr als einen entsprechenden Differenzschwellenwert von der vorherigen Strategie abweichen darf; und

Bestimmen der aktualisierten Strategie durch Anpassen des Satzes von Strategieparametern an eine Kombination der zielspezifischen Strategien, und wobei:

(i) die Umgebung eine reale Umgebung ist und der Agent ein mechanischer Agent ist, der mit der realen Umgebung interagiert; oder

(ii) der Agent ein elektronischer Agent ist, die Beobachtungen Daten von einem oder mehreren Sensoren einschließen, die einen Teil einer Anlage oder Serviceeinrichtung überwachen, die Ausrüstungsgegenstände einschließt, die Beobachtungen sich auf den Betrieb der Anlage oder Einrichtung beziehen, die Aktionen Aktionen einschließen, die Ausrüstungsgegenstände steuern oder Betriebsbedingungen für die Ausrüstungsgegenstände auferlegen, und/oder Aktionen, die zu Änderungen an Einstellungen im Betrieb der Anlage/Einrichtung führen, und die Ziele eines oder mehrere der folgenden einschließen: ein Maß für Effizienz; elektrischen oder sonstigen Stromverbrauch; Heiz-/Kühlanforderungen; Ressourcennutzung in der Einrichtung; eine Temperatur der Einrichtung; eine Zählung von Merkmalen von Gegenständen innerhalb der Einrichtung; oder

(iii) die Umgebung eine Datenpaketkommunikationsnetzwerkumgebung ist, der Agent einen Router umfasst, um Datenpakete über das Kommunikationsnetzwerk zu routen, die Aktionen Datenpaketroutingaktionen umfassen, die Beobachtungen Beobachtungen einer Routingtabelle umfassen, die Routingmetriken einschließt, und die Ziele Ziele einschließen, eine oder mehrere der Routingmetriken zu maximieren oder zu minimieren; oder

(iv) der Agent ein Softwareagent ist, der die Verteilung von Aufgaben über Rechenressourcen hinweg verwaltet, die Beobachtungen Beobachtungen von Rechenressourcen einschließen und die Ziele von einem oder mehreren der folgenden abhängig sind: Auslastung von Rechenressourcen, elektrische Leistung, Bandbreite und Rechengeschwindigkeit.

2. Verfahren nach Anspruch 1, wobei: das Anpassen des Satzes von Strategieparametern der aktualisierten Strategie an die Kombination der zielspezifischen Strategien das Bestimmen des Satzes von Strategieparametern umfasst, der eine Differenz zwischen der aktualisierten Strategie und der Kombination der zielspezifischen Strategien minimiert.

3. Verfahren nach Anspruch 1 oder Anspruch 2, wobei der Satz von Strategieparametern für die aktualisierte Strategie derart eingeschränkt ist, dass die Differenz zwischen der aktualisierten Strategie und der vorherigen Strategie einen Vertrauensbereichsschwellenwert nicht überschreiten kann.

4. Verfahren nach einem der Ansprüche 1 bis 3, wobei der entsprechende Differenzschwellenwert den relativen Beitrag des entsprechenden Ziels zur aktualisierten Strategie darstellt.

5. Verfahren nach einem der Ansprüche 1 bis 4, wobei die zielspezifischen Strategien nichtparametrische Strategien sind.

6. Verfahren nach einem der Ansprüche 1 bis 5, wobei jede zielspezifische Strategie, $q_k\,(a|s)$, aus einer skalierten Aktionswertfunktion für das Ziel der zielspezifischen Strategie bestimmt wird, wobei die skalierte Aktionswertfunktion durch einen Wert skaliert wird, der von einer Präferenz für das Ziel abhängt.

7. Verfahren nach Anspruch 6, wobei der Wert, der von einer Präferenz für das Ziel abhängt, vom Differenzschwellenwert für das Ziel abhängt.

8. Verfahren nach einem der Ansprüche 5 bis 7, wobei jede zielspezifische Strategie, $q_k\,(a|s)$, durch Berechnen von Folgendem bestimmt wird:

$$q_k(a \mid s) = N\pi_{old}(a \mid s)\exp\left(\frac{Q_k(s,a)}{\eta_k}\right)$$

wobei:

N eine Normalisierungskonstante ist;
k das Ziel ist;
a eine Aktion ist;
s ein Zustand ist;
$\pi_{old}\,(a|s)$ die vorherige Strategie ist;
$Q_k\,(s,\,a)$ die Aktionswertfunktion für das Ziel ist; und
$\eta_k$ ein Temperaturparameter ist.

9. Verfahren nach Anspruch 8, wobei für jedes Ziel, k, der Temperaturparameter $\eta k$ durch Lösen der folgenden Gleichung bestimmt wird:

$$\eta_k = \underset{\eta}{\arg\min}\,\eta\epsilon_k + \eta \int_S \mu(s)\log \int_a \pi_{old}(a \mid s)\exp\left(\frac{Q_k(s,a)}{\eta}\right)da\,\mathrm{d}s$$

wobei:

$\varepsilon_k$ der Differenzschwellenwert für das entsprechende Ziel ist;
und
$\mu(s)$ eine Besuchsverteilung ist.

10. Verfahren nach Anspruch 9, wobei jeder Temperaturparameter durch Gradientenabstieg bestimmt wird.

11. Verfahren nach einem der vorhergehenden Ansprüche, wobei:

jede Aktionswertfunktion eine Verteilung von Aktionswerten für ein entsprechendes Ziel der Vielzahl von Zielen über einen Bereich potenzieller Zustands-Aktions-Paare für die vorherige Strategie bereitstellt, und/oder
jede Aktionswertfunktion einen Aktionswert ausgibt, der die erwartete kumulative diskontierte Belohnung für das entsprechende Ziel darstellt, wenn eine gegebene Aktion als Reaktion auf einen gegebenen Zustand gewählt wird.

12. System, umfassend einen oder mehrere Computer und eine oder mehrere Speichervorrichtungen, die Anweisungen speichern, die, wenn sie von dem einen oder den mehreren Computern ausgeführt werden, den einen oder die mehreren Computer veranlassen, das Verfahren nach einem der Ansprüche 1 bis 11 durchzuführen.

13. Eines oder mehrere Computerspeichermedien, die Anweisungen speichern, die, wenn sie von einem oder mehreren Computern ausgeführt werden, den einen oder die mehreren Computer veranlassen, das Verfahren nach einem der Ansprüche 1 bis 11 durchzuführen.

**Revendications**

1. Procédé mis en œuvre par ordinateur pour l'entraînement d'un système de réseau neuronal (100) par apprentissage par renforcement, le système de réseau neuronal comprend un réseau neuronal configuré pour recevoir une observation d'entrée caractérisant un état (106) d'un environnement avec lequel interagit un agent (104) et pour sélectionner et produire une action (102) conformément à une politique qui est codée dans un ensemble de paramètres de politique du réseau neuronal et qui vise à satisfaire une pluralité d'objectifs, le procédé comprenant :

   l'obtention (210, 310) d'un ensemble d'une ou de plusieurs trajectoires, chaque trajectoire comprenant un état (106) de l'environnement, une action appliquée par l'agent à l'environnement selon une politique précédente en réponse à l'état, et un ensemble de récompenses (108) pour l'action, chaque récompense se rapportant à un objectif correspondant de la pluralité d'objectifs ;
   la détermination (220, 320) d'une fonction de valeur d'action pour chacun de la pluralité d'objectifs sur la base de l'ensemble d'une ou de plusieurs trajectoires, chaque fonction de valeur d'action déterminant une valeur d'action représentant un rendement estimé selon l'objectif correspondant qui résulterait de la réalisation par l'agent d'une action donnée en réponse à un état donné selon la politique précédente ; et
   la détermination (230, 335) d'une politique mise à jour sur la base d'une combinaison des fonctions de valeur d'action pour la pluralité d'objectifs, la détermination de la politique mise à jour comprenant :

      la détermination d'une politique spécifique à l'objectif pour chaque objectif dans la pluralité d'objectifs, chaque politique spécifique à l'objectif étant déterminée sur la base de la fonction de valeur d'action correspondante pour l'objectif correspondant, dans lequel la détermination de la politique spécifique à l'objectif pour chaque objectif comprend la détermination de paramètres de politique spécifique à l'objectif pour la politique spécifique à l'objectif qui maximisent le rendement attendu selon la fonction de valeur d'action pour l'objectif correspondant par rapport à la politique précédente, sous réserve d'une contrainte selon laquelle la politique spécifique à l'objectif ne peut pas différer de la politique précédente de plus d'un seuil de différence correspondant ; et
      la détermination de la politique mise à jour en ajustant l'ensemble de paramètres de politique à une combinaison des politiques spécifiques à l'objectif, et dans lequel :

         (i) l'environnement est un environnement du monde réel et l'agent est un agent mécanique interagissant avec l'environnement du monde réel ; ou
         (ii) l'agent est un agent électronique, les observations comportent des données provenant d'un ou de plusieurs capteurs surveillant une partie d'une usine ou d'une installation de service comportant des éléments d'équipement, les observations concernent le fonctionnement de l'usine ou de l'installation, les actions comportent des actions commandant ou imposant des conditions de fonctionnement sur les éléments d'équipement, et/ou des actions qui entraînent des modifications des paramètres dans le fonctionnement de l'usine/installation, et les objectifs comportent un ou plusieurs des éléments suivants : une mesure de l'efficacité ; la consommation électrique ou d'une autre énergie ; les besoins en chauffage/refroidissement ; l'utilisation des ressources dans l'installation ; une température de l'installation ; un décompte de caractéristiques d'éléments à l'intérieur de l'installation ; ou
         (iii) l'environnement est un environnement de réseau de communication par paquets de données, l'agent comprend un routeur pour acheminer des paquets de données sur le réseau de communication, les actions comprennent des actions de routage de paquets de données, les observations comprennent des observations d'une table de routage qui comporte des métriques de routage, et les objectifs comportent des objectifs pour maximiser ou minimiser une ou plusieurs des métriques de routage ; ou
         (iv) l'agent est un agent logiciel qui gère la distribution de tâches entre les ressources informatiques, les observations comportent des observations de ressources informatiques et les objectifs dépendent d'un ou de plusieurs des éléments suivants : l'utilisation de ressources informatiques, la puissance électrique, la bande passante et la vitesse de calcul.

2. Procédé selon la revendication 1, dans lequel : l'ajustement de l'ensemble de paramètres de politique de la politique mise à jour à la combinaison des politiques spécifiques à l'objectif comprend la détermination de l'ensemble de paramètres de politique qui minimise une différence entre la politique mise à jour et la combinaison des politiques spécifiques à l'objectif.

3. Procédé selon la revendication 1 ou la revendication 2, dans lequel l'ensemble de paramètres de politique pour la politique mise à jour est limité de sorte que la différence entre la politique mise à jour et la politique précédente ne peut pas dépasser un seuil de région de confiance.

4. Procédé selon l'une quelconque des revendications 1 à 3, dans lequel le seuil de différence correspondant représente la contribution relative de l'objectif correspondant à la politique mise à jour.

5. Procédé selon l'une quelconque des revendications 1 à 4, dans lequel les politiques spécifiques à l'objectif sont des politiques non paramétriques.

6. Procédé selon l'une quelconque des revendications 1 à 5, dans lequel chaque politique spécifique à l'objectif, $q_k(a|s)$, est déterminée à partir d'une fonction de valeur d'action mise à l'échelle pour l'objectif de la politique spécifique à l'objectif, dans lequel la fonction de valeur d'action mise à l'échelle est mise à l'échelle par une valeur dépendant d'une préférence pour l'objectif.

7. Procédé selon la revendication 6, dans lequel la valeur dépendant d'une préférence pour l'objectif dépend du seuil de différence pour l'objectif.

8. Procédé selon l'une quelconque des revendications 5 à 7, dans lequel chaque politique spécifique à l'objectif, $q_k(a|s)$, est déterminée en calculant :

$$q_k(a \mid s) = N\pi_{old}(a \mid s) \exp\left(\frac{Q_k(s,a)}{\eta_k}\right)$$

où :

$N$ est une constante de normalisation ;
$k$ est l'objectif ;
$a$ est une action ;
$s$ est un état ;
$\pi_{old}(a|s)$ est la politique précédente ;
$Q_k(s, a)$ est la fonction de valeur d'action pour l'objectif ;
et
$\eta_k$ est un paramètre de température.

9. Procédé selon la revendication 8, dans lequel, pour chaque objectif $k$, le paramètre de température $\eta_k$ est déterminé en résolvant l'équation suivante :

$$\eta_k = \operatorname*{argmin}_{\eta} \eta\epsilon_k + \eta \int_s \mu(s) \log \int_a \pi_{old}(a \mid s) \exp\left(\frac{Q_k(s,a)}{\eta}\right) da \, ds$$

où :

$\varepsilon_k$ est le seuil de différence pour l'objectif correspondant ; et
$\mu(s)$ est une distribution de visites.

10. Procédé selon la revendication 9, dans lequel chaque paramètre de température est déterminé par descente de gradient.

11. Procédé selon une quelconque revendication précédente, dans lequel :

chaque fonction de valeur d'action fournit une distribution de valeurs d'action pour un objectif correspondant de la pluralité d'objectifs sur une plage de paires état-action potentielles pour la politique précédente, et/ou
chaque fonction de valeur d'action produit une valeur d'action représentant la récompense actualisée cumulative attendue pour l'objectif correspondant lors du choix d'une action donnée en réponse à un état donné.

12. Système comprenant un ou plusieurs ordinateurs et un ou plusieurs dispositifs de stockage stockant des instructions qui, lorsqu'elles sont exécutées par les un ou plusieurs ordinateurs, amènent les un ou plusieurs ordinateurs à réaliser le procédé selon l'une quelconque des revendications 1 à 11.

13. Un ou plusieurs supports de stockage informatiques stockant des instructions qui, lorsqu'elles sont exécutées par un ou plusieurs ordinateurs, amènent les un ou plusieurs ordinateurs à réaliser le procédé selon l'une quelconque des revendications 1 à 11.

FIG. 1

200

Obtain a set of one or more trajectories, each trajectory comprising a state of an environment, an action applied by the agent to the environment according to a previous policy in response to the state, and a set of rewards for the action, each reward relating to a corresponding objective of the plurality of objectives

210

Determine an action-value function $Q_k$ for each of the plurality of objectives based on the set of one or more trajectories

220

Determine an updated policy based on a combination of the action-value functions for the plurality of objectives

230

No        End?        Yes

240

Output policy

250

FIG. 2

Apply policy to obtain a set of one or more trajectories, each trajectory comprising a state of an environment, an action applied by the agent to the environment according to a previous policy in response to the state, and a set of rewards for the action, each reward relating to a corresponding objective of the plurality of objectives

310

Determine an action-value function $Q_k$ for each of the plurality of objectives based on the set of one or more trajectories

320

Determine an action distribution $q_k$ for each objective based on the corresponding action-value function $Q_k$

330

Determine an updated policy based on a combination of the action functions for the plurality of objectives

335

No      End?      Yes

340

Output policy

350

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SCHAUL et al.** Universal Value Function Approximators. *Proceedings Of The 32nd International Conference On Machine Learning*, 11 July 2015, vol. 37

- Composable Deep Reinforcement Learning for Robotic Manipulation. **HAARNOJA et al.** arxiv.org. Cornell University, 19 March 2018
- Reinforcement Learning with Deep Energy-Based Policies. **HAARNOJA et al.** arxiv.org. Cornell University Library, 27 February 2017